# EUROPÄISCHE PATENTSCHRIFT

(11) **EP 2 330 469 B1**
(45) Veröffentlichungstag und Bekanntmachung des Hinweises auf die Patenterteilung: **31.10.2012**
(21) Anmeldenummer: 09015018.6
(22) Anmeldetag: 03.12.2009
(51) Int. Cl.: G05B 19/042

(54) **Verfahren und Entwicklungsumgebung zur Erzeugung eines ausführbaren Gesamtsteuerungsprogramms**
Method and development environment for generating an executable total control program
Procédé et environnement de développement destinés à produire un programme de commande complet exécutable

(43) Veröffentlichungstag der Anmeldung: 08.06.2011
(73) Patentinhaber: dspace digital signal processing and control engineering GmbH, 33102 Paderborn (DE)
(72) Erfinder: Schmidt, Carsten, Dr., 32049 Herford (DE); Trautmann, Wolfgang, 63500 Seligenstadt (DE); Niere, Jörg, Dr., 32805 Horn-Bad Meinberg (DE)
(74) Vertreter: Gesthuysen, von Rohr & Eggert

(56) Entgegenhaltungen:
- EP-A1- 1 522 910
- EP-A1- 1 746 499

## Beschreibung

Die Erfindung betrifft ein Verfahren zur Erzeugung eines ausführbaren Gesamtsteuerungsprogramms, insbesondere eines Mess-, Steuer-, Regel- und/oder Kalibrierungsprogramms, zur Steuerung eines Steuerungssystems mit mindestens einer elektronischen Rechnereinheit, wobei mehrere Funktionsmodellteile eines die Funktionalität des Gesamtsteuerungsprogramms beschreibenden Funktionsmodells in Funktionscode übersetzt werden, die in den Funktionsmodellteilen verwendeten Datenelemente zumindest teilweise in einer von dem Funktionsmodell verschiedenen Datenelementsammlung aufgelistet werden, wobei Referenzen zwischen Datenelementen in der Datenelementsammlung und jenen Funktionsmodellteilen des Funktionsmodells erfasst werden, in denen die Datenelemente verwendet werden, und diese Referenzen als zusätzliche Referenzinformationen gespeichert werden, wobei in der Datenelementsammlung solche Datenelemente, die mehreren Funktionsmodellteilen zugeordnet sind, in wenigstens einer Datenelementgruppe als Gemeinschaftsdatenelemente gruppiert werden und wenigstens ein Teil der Datenelemente der Datenelementsammlung in Datencode übersetzt wird.

Darüber hinaus betrifft die Erfindung auch eine Entwicklungsumgebung zur Erzeugung eines ausführbaren Gesamtsteuerungsprogramms zur Steuerung eines Steuerungssystems mit mindestens einer elektronischen Rechnereinheit, mit wenigstens einem Entwicklungsrechner, wenigstens einer Modellierungseinheit, wenigstens einer Datenelementverwaltungseinheit und wenigstens einer Funktionscodegenerierungseinheit, wobei mit der auf dem Entwicklungsrechner betriebenen Modellierungseinheit wenigstens ein Funktionsmodellteil eines die Funktionalität des Gesamtsteuerungsprogramms beschreibenden Funktionsmodells modelliert werden kann und die Funktionsmodellteile mittels der Funktionscodegenerierungseinheit in Funktionscode übersetzbar sind, die in den Funktionsmodellteilen verwendeten Datenelemente mit der Datenelementverwaltungseinheit in einer von dem Funktionsmodell verschiedenen Datenelementsammlung aufgelistet und verwaltet werden können, wobei mit der Modellierungseinheit Referenzen zwischen Datenelementen in der Datenelementsammlung und jenen Funktionsmodellteilen des Funktionsmodells erfassbar sind, in denen die Datenelemente verwendet werden, wobei diese Referenzen als zusätzliche Referenzinformationen gespeichert werden und mit der Datenelementverwaltungseinheit in der Datenelementsammlung solche Datenelemente, die mehreren Funktionsmodellteilen zugeordnet sind, in wenigstens einer Datenelementgruppe als Gemeinschaftsdatenelemente gruppiert werden können und wenigstens ein Teil der Datenelemente der Datenelementsammlung in Datencode übersetzt werden kann.

Verfahren und Entwicklungsumgebungen der vorgenannten Art haben in den letzten Jahren eine weite Verbreitung gefunden, wenn es um die automatisierte Codeerzeugung für meist echtzeitfähige Steuerungssysteme geht (z. B. Produktbeschreibung "dSPACE Data Dictionary, Basic Concepts Guide, TargetLink 3.0", July 2008). Als Rechnereinheiten werden häufig ― je nach Komplexitätsgrad des Steuerungssystems ein oder mehrere ― Steuergeräte eingesetzt, die üblicherweise entsprechende I/O-Schnittstellen aufweisen, um Zustandsgrößen des zu beeinflussenden physikalisch-technischen Systems messtechnisch erfassen zu können, und um auf das physikalisch-technische System durch Ausgabe bestimmter Stellgrößen Einfluss nehmen zu können.

Der Vorteil derartiger Verfahren besteht darin, dass auf einer abstrakten Ebene die gewünschte Funktionalität des Gesamtsteuerungsprogramms modelliert werden kann, beispielsweise in Form von Blockschaltbildern, die auf sehr einfache Art und Weise die Darstellung von selbst komplizierten mathematischen und strukturellen Zusammenhängen gestatten. Selbst I/O-Funktionalitäten lassen sich im Rahmen eines solchen Funktionsmodells darstellen. Durch Einsatz der in Rede stehenden Verfahren ist es dann grundsätzlich möglich, für die sehr spezielle Hardware der elektronischen Rechnereinheit Code zu erzeugen, der in ein Gesamtsteuerungsprogramm übersetzt ― compiliert ― wird und auf dieser Zielhardware ausgeführt und erprobt werden kann. Die fehleranfällige manuelle Umsetzung einer Steuerungsidee in ein Gesamtsteuerungsprogramm entfällt, wodurch erst die heute üblichen schnellen Entwicklungszyklen beispielsweise im Rahmen des Rapid-Control-Prototyping oder der Hardware-in-the-Loop-Simulationen möglich geworden sind.

Das Funktionsmodell ist häufig ― allein aufgrund der Komplexität vieler Modelle und der damit verbundenen Regelungsaufgaben ― in mehrere Funktionsmodellteile untergliedert, die von verschiedenen Entwicklern oder Entwicklergruppen bearbeitet werden. Bei einem Fahrzeug kann es sich bei den Funktionsmodellteilen beispielsweise um die Funktionsmodelle von Antriebsaggregat, Antriebsstrang und Fahrzeugaufbau handeln, wobei jeder dieser Funktionsmodellteile wiederum in weiter untergeordnete Funktionsmodellteile zerfallen kann. Da es sich um Funktionsmodellteile eines einheitlichen Funktionsmodells handelt, weisen diese Funktionsmodellteile üblicherweise Schnittstellen auf, über die Funktionsmodellteile solche Zustandsgrößen austauschen, über die die Funktionsmodellteile gekoppelt sind. Andere Zustandsgrößen sind nur innerhalb eines Funktionsmodellteils sichtbar und werden nicht zwischen Funktionsmodellteilen ausgetauscht. Dieser Situation vergleichbar, gibt es häufig auch Parameter des Funktionsmodells, die in mehreren Funktionsmodellteilen Verwendung finden, wie auch solche Parameter, die ausschließlich lokal in einem einzigen Funktionsmodellteil verwendet werden. All diese Größen werden hier insgesamt als Datenelemente bezeichnet.

Um einen übergeordneten Blick auf die in dem Funktionsmodell insgesamt verwendeten Datenelemente zu erhalten, werden die in den Funktionsmodellteilen verwendeten Datenelemente in einer von dem Funktionsmodell verschiedenen Datenelementsammlung aufgelistet und verwaltet; die Datenelementsammlung ist also nicht Teil eines Funktionsmodellteils, sondern eine separate Einheit zu den Funktionsmodellteilen. Eine gewisse Konsistenz zwischen den in den Funktionsmodellteilen verwendeten Datenelemente und den in der Datenelementsammlung erfassten Datenelementen wird sichergestellt, indem zusätzlich Referenzen zwischen den Datenelementen der Datenelementsammlung und den Funktionsmodellteilen des Funktionsmodells erfasst werden, in denen eben diese Datenelemente verwendet werden. Diese Referenzen werden als zusätzliche Referenzinformation abgespeichert.

Es besteht darüber hinaus in der Datenelementsammlung die Möglichkeit, jene Datenelemente, die mehreren Funktionsmodellteilen zugeordnet sind, in einer Datenelementgruppe ― oder natürlich auch untergliedert in mehrere Datenelementgruppen ― als Gemeinschaftsdatenelemente zu gruppieren; oben sind beispielhaft für solche Datenelemente Schnittstellen-Zustandsgrößen und übergeordnete Parameter genannt worden. Während aus den Funktionsmodellteilen der schon beschriebene Funktionscode erzeugt wird, ist es nun im Rahmen der Codeerzeugung für einen Funktionsmodellteil möglich, einen korrespondierenden Datencode für den Teil der Datenelemente zu erzeugen, die in der Datensammlung als Gemeinschaftsdatenelement gruppiert und in dem entsprechenden Funktionsmodellteil enthalten sind. Der erhaltene Datencode und der aus den Funktionsmodellteilen erhaltene Funktionscode müssen zur fehlerfreien Erstellung des ausführbaren Gesamtsteuerungsprogramms insgesamt vollständig, eindeutig und widerspruchsfrei sind.

Im Stand der Technik ist es beispielsweise üblich, für jeden Funktionsmodellteil separat die Erzeugung von Funktionscode vorzunehmen, wobei in den Funktionscode des entsprechenden Funktionsmodellteils beispielsweise alle Deklarationen von Datenelementen generiert werden, die in diesem Funktionsmodellteil von Interesse sind. Dies ist vollkommen unproblematisch, sofern es sich um Definitionen von Datenelementen handelt, die ausschließlich in dem betreffenden Funktionsmodellteil vorkommen. Solange nur der Funktionscode eines einzigen Funktionsmodellteils generiert und untersucht werden soll, ist auch die Erzeugung von Deklarationen und Definitionen von solchen Datenelementen unproblematisch, die tatsächlich in mehreren Funktionsmodellteilen verwendet werden, da auch Gemeinschaftsdatenelemente aufgrund der singulären Codegenerierung für nur einen einzigen Funktionsmodellteil auch nur zu einer einzigen Definition von Gemeinschaftsdatenelementen führen kann. Dort, wo Referenzen von dem Funktionsmodellteil in die Datenelementsammlung verweisen, werden diese Referenzen bei der Erzeugung des Datencodes verwendet, wodurch jedenfalls sichergestellt ist, dass ein Gemeinschaftsdatenelement gemeinschaftlich einheitlich auch von anderen Funktionsmodellteilen verwendet wird.

Wird aber nicht nur Funktionscode für einen einzigen Funktionsmodellteil, sondern für mehrere Funktionsmodellteile generiert, kommt es schnell zu Mehrfachdefinitionen von Datenelementen, wenn der Datencode von Gemeinschaftsdatenelementen für jeden Funktionsmodellteil generiert wird. Es kommt außerdem zu einer unvollständigen Erzeugung von Datencode, wenn Gemeinschaftsdatenelemente so gruppiert sind, dass sie zwar in einen separaten Datencode generiert werden — also beispielsweise in eine eigene Header-Datei ―, wenn jedoch kein Funktionsmodellteil alle diese Gemeinschaftsdatenelemente der entsprechenden Datenelementgruppe enthält. Denn bei der Codeerzeugung aus einem Funktionsmodell wird stets nur für die Datenelemente Code erzeugt, auf die aus dem entsprechenden Funktionsmodellteil referenziert wird.

Es ist daher Aufgabe der vorliegenden Erfindung, ein Verfahren ― und eine entsprechende Entwicklungsumgebung — anzugeben, das die vollständige und eindeutige Generierung von Datencode für ein Funktionsmodell zur Erzeugung eines integralen Gesamtsteuerungsprogramms ermöglicht.

Die zuvor hergeleitete und aufgezeigte Aufgabe ist bei dem eingangs beschriebenen Verfahren zur Erzeugung eines ausführbaren Gesamtsteuerungsprogramms dadurch gelöst, dass der Datencode für Gemeinschaftsdatenelemente aus der Datensammlung unabhängig von dem Funktionsmodell erzeugt wird und der Funktionscode und der Datencode vollständig und unter Verwendung der Referenzinformation konsistent zu dem ausführbaren Gesamtsteuerungsprogramm zusammengefügt und übersetzt werden.

Das erfindungsgemäße Verfahren zeichnet sich dadurch aus, das es sich von der bekannten Erzeugung des Datencodes im Rahmen der Funktionscode-Erzeugung für ein und in Abhängigkeit von einem Funktionsmodellteil löst, und jedenfalls den Datencode für Gemeinschaftsdatenelemente nicht mehr in Abhängigkeit davon erzeugt, ob die Gemeinschaftsdatenelemente aus einem Funktionsmodellteil referenziert werden, sondern in Abhängigkeit davon, ob die Gemeinschaftsdatenelemente in der Datensammlung vorhanden sind. Dadurch wird stets gewährleistet, dass kein Gemeinschaftsdatenelement durch nachfolgende funktionsmodellabhängige Generierung von Datencode überdeckt werden und der Datencode somit unvollständig wird, genauso wie verhindert wird, dass Mehrfachdefinitionen von Gemeinschaftsdatencode vorkommen, weil etwa jeder Funktionsmodellteil den Datencode für jedes verwendete Gemeinschaftsdatenelement erneut in seinen Funktionscode generiert, wodurch es zwangsläufig zu Mehrfachdefinitionen kommen muss. Wenn es heißt, dass der Datencode für Gemeinschaftsdatenelemente aus der Datensammlung unabhängig von dem Funktionsmodell erzeugt wird, dann ist damit natürlich gemeint, dass eben nicht nur Datencode für jene Gemeinschaftsdatenelemente generiert wird, die gerade aus einem bestimmten Funktionsmodellteil referenziert werden, sondern dass Datencode unter Verwendung aller Gemeinschaftsdatenelemente erzeugt wird, die zwangsläufig in der Datenelementsammlung abgelegt sind. Die Generierung von Datencode für Gemeinschaftsdatenelemente geschieht damit nicht mehr selektiv hinsichtlich irgendwelcher Funktionsmodellteile und der darin enthaltenen Referenzen in die Datenelementsammlung, sondern unabhängig von diesen Funktionsmodellteilen und unter vollständiger Verwendung aller Informationen über die Gemeinschaftsdatenelemente in der Datenelementsammlung, beispielsweise selektiv bezüglich einer Datenelementgruppe.

Bei einer vorteilhaften Ausgestaltung des erfindungsgemäßen Verfahrens ist vorgesehen, dass Gemeinschaftsdatenelemente zunächst in der Datenelementsammlung definiert werden und diese Gemeinschaftsdatenelemente erst danach in den Funktionsmodellteilen durch Referenzen auf die in der Datenelementsammlung definierten Gemeinschaftsdatenelemente verwendet werden. Durch diese Maßnahme wird erzwungen, dass in den Funktionsmodellteilen tatsächlich identische Datenelemente aus der Datenelementgruppe der Gemeinschaftsdatenelemente verwendet werden und nicht irrtümlich in verschiedenen Funktionsmodellteilen für ein einziges gewünschtes Gemeinschaftsdatenelement verschiedene Versionen angelegt werden.

Als besonders vorteilhaft hat es sich herausgestellt, wenn der die Datenelemente einer Datenelementgruppe repräsentierende Datencode jeweils in ein separates Datencodemodul generiert wird, also etwa in eine Header-Datei, die entsprechende Deklarationen und/oder Definitionen der Datenelemente dieser Datenelementgruppe vornimmt. Dadurch wird insgesamt ein modulartiger Codeaufbau gewährleistet, der übersichtlich und leicht pflegbar ist. Vorstellbar ist beispielsweise, dass in der Datenelementsammlung eine Datenelementgruppe mit einem bestimmten Namen versehen wird und alle Datenelemente dieser Datenelementgruppe dann in ein Datencodemodul generiert werden, wobei das Datencodemodul den Namen der Datenelementgruppe trägt.

Als besonders vorteilhaft hat es sich erwiesen, wenn die die Kommunikation zwischen Funktionsmodellteilen realisierenden Gemeinschaftsdatenelemente zumindest teilweise in einer Schnittstellen-Datenelementgruppe gruppiert werden und zusätzlich oder alternativ die in Funktionsmodellteilen als Parameter verwendeten Gemeinschaftsdatenelemente in einer Parameter-Datenelementgruppe gruppiert werden. Auf diese Art sind Datenelemente leicht voneinander trennbar, die zum einen auf der Kommunikation zwischen Funktionsmodellteilen beruhen, und die zum anderen unabhängig von der Kommunikation sind.

In einer bevorzugten Ausgestaltung des erfindungsgemäßen Verfahrens ist vorgesehen, dass in der Datenelementsammlung verschiedene Varianten von Gemeinschaftsdatenelementen und zusätzlich oder alternativ Varianten von Datenelementgruppen von Gemeinschaftsdatenelementen definiert werden und bei der Übersetzung entsprechender Varianten-Datencode erzeugt wird. Der Berücksichtigung von verschiedenen Varianten bei der Erzeugung eines Gesamtsteuerungsprogramms kommt eine besondere Bedeutung zu, da über die Bildung von Varianten auf sehr einfache Weise innerhalb eines einzigen Funktionsmodells verschiedene funktionale oder parametermäßige Variationen ausgetestet werden können, ohne dafür verschiedene eigenständige Funktionsmodelle vorhalten zu müssen. Dies wird beispielsweise dann deutlich, wenn ein Steuerungssystem auf Grundlage verschiedener Sätze von Kalibrierparametern ausgetestet werden soll, wobei nicht für jeden Satz von Kalibrierparametern ein eigenständiges Modell erstellt werden soll. Hier ist es vielmehr praktischer und erfindungsgemäß vorgesehen, verschiedene Parameter-Datenelementgruppen als Varianten zu kennzeichnen, die dann untereinander ausgetauscht werden können.

Gemäß einer weiteren vorteilhaften Ausgestaltung der Erfindung ist bei dem zuvor beschriebenen Varianten-Management vorgesehen, dass vorgegeben wird, zu welchem Zeitpunkt des Entstehens des Gesamtsteuerungsprogramms eine Variante ausgewählt wird, ob die Varianten also bereits bei der Codegenerierung ausgewählt ― und nicht genutzte Varianten verworfen ― werden, oder ob im anderen Extremfall alle Varianten bis in das Gesamtsteuerungsprogramm gerettet werden und dort noch zur Laufzeit auswählbar sind. In der Datenelementsammlung wird also der Selektionszeitpunkt der zu verwendenden Variante aus den verschiedenen Varianten angegeben, nämlich ob die zu verwendende Variante bei der Übersetzung in Datencode, bei der Übersetzung des Datencodes in das ausführbare Gesamtsteuerungsprogramm oder bei Ausfiihrung des Gesamtsteuerungsprogramms ausgewählt wird. Dabei wird in Abhängigkeit von dem Selektionszeitpunkt automatisch entsprechender Datencode erzeugt und ein entsprechendes ausführbares Gesamtsteuerungsprogramm übersetzt.

Die Erstellung eines Gesamtsteuerungsprogramms aus einem Funktionsmodell und einer Datenelementsammlung kann erhebliche Zeit in Anspruch nehmen. Bei komplexeren Modellen werden zehntausende von Codezeilen erzeugt, die dann von entsprechenden Compilern für die Zielhardware zu übersetzen sind. Ein solcher Vorgang kann mehrere Stunden in Anspruch nehmen. Sofern das Verfahren so durchgeführt wird, dass der die Datenelemente einer Datenelementgruppe repräsentierende Datencode jeweils in ein separates Datencodemodul generiert wird, dann wird das Verfahren bevorzugt weiterhin so durchgeführt, dass nach Veränderung von Datenelementen in der Datenelementsammlung nur die Datencodemodule derjenigen Datenelementgruppen neu generiert werden, die veränderte Datenelemente enthalten. Dadurch kann häufig darauf verzichtet werden, einen Großteil des bereits erzeugten Funktions- und Datencode erneut zu generieren, was eine erhebliche Zeitersparnis mit sich bringt.

Die Erfindung betrifft ferner ein Computerprogramm mit Programmcode-Mitteln, um alle mit Hilfe des zuvor beschriebenen Verfahrens vollzogenen Schritte durchzuführen, wenn das Programm auf einer Datenverarbeitungsanlage ausgeführt wird, was in der Praxis stets der Fall ist. Die Erfindung betrifft ferner ein solches Computerprogramm mit Programmcode-Mitteln, die auf einem computerlesbaren Datenträger gespeichert sind.

Gemäß einer unabhängigen Lehre der Erfindung wird die aufgezeigte Aufgabe bei der eingangs dargestellten Entwicklungsumgebung zur Erzeugung eines ausführbaren Gesamtsteuerungsprogramms dadurch gelöst, dass der Datencode für Gemeinschaftsdatenelemente aus der Datensammlung mit einer Datencodegenerierungseinheit unabhängig von dem Funktionsmodell erzeugt werden kann und der Funktionscode und der Datencode unter Verwendung der Referenzinformation konsistent zu dem ausführbaren Gesamtsteuerungsprogramm zusammengefügt und übersetzt werden kann. Wenn vorliegend gesagt wird, dass die Entwicklungsumgebung in einer bestimmten Art und Weise eingerichtet ist, so dass eine bestimmte Maßnahme durchgeführt werden kann, dann ist damit gemeint, dass diese Entwicklungsumgebung konkret zur Durchführung der Maßnahme geeignet und eingerichtet ist und nicht lediglich die abstrakte Eignung dazu aufweist.

Im Einzelnen gibt es nun eine Vielzahl von Möglichkeiten, das erfindungsgemäße Verfahren und die erfindungsgemäße Entwicklungsumgebung zur Erzeugung eines ausführbaren Gesamtsteuerungsprogramms auszugestalten und weiterzubilden. Dazu wird verwiesen einerseits auf die dem Patentanspruch 1 nachgeordneten Patentansprüche, andererseits auf die folgende Beschreibung von Ausfiihrungsbeispielen in Verbindung mit der Zeichnung. In der Zeichnung zeigen
- Fig. 1: ein Verfahren zur Erzeugung eines ausführbaren Gesamtsteuerungsprogramms aus dem Stand der Technik,
- Fig. 2: ein weiteres aus dem Stand der Technik bekanntes Verfahren zur Erzeugung eines ausführbaren Gesamtsteuerungsprogramms,
- Fig. 3: ein weiteres aus dem Stand der Technik bekanntes alternatives Verfahren zur Erzeugung eines ausführbaren Gesamtsteuerungs-programms unter Verwendung einer Datenelementsammlung,
- Fig. 4: die Darstellung des erfindungsgemäßen Verfahrens zur Erzeugung eines Gesamtsteuerungsprogramms,
- Fig. 5: eine weitere Darstellung des erfindungsgemäßen Verfahrens mit verschiedenen generierten Datencodemodulen,
- Fig. 6: das erfindungsgemäße Verfahren mit der Möglichkeit zur Handhabung von Varianten von Datenelementen und

- Fig. 7: die Darstellung eines Teils der erfindungsgemäßen Entwicklungsumgebung.

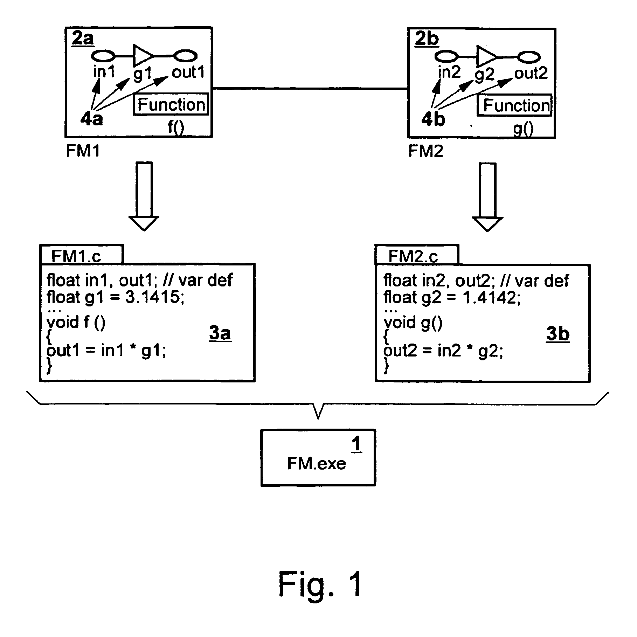

Die Fig. 1 bis 3 zeigen schematisch die Funktionsweise von aus dem Stand der Technik bekannten Verfahren zur Erzeugung eines ausführbaren Gesamtsteuerungsprogramms 1, bei dem es sich in den hier dargestellten Fällen stets um ein technisches Steuerungsprogramm handelt, und zur Steuerung eines Steuerungssystems mit einer ― jeweils nicht dargestellten ― elektronischen Rechnereinheit dient. Vorliegend ist die Rechnereinheit jeweils ein programmierbares Steuergerät mit entsprechenden I/O-Modulen, wie sie im automotiven Bereich in einer Vielzahl von Ausführungsformen innerhalb eines einzigen Fahrzeuges verwendet werden.

Ein Funktionsmodell 2 beschreibt auf einer hohen Abstraktionsebene ― vorliegend durch die schematisch angedeuteten Blockschaltbilddiagramme ― die Funktionalität des Gesamtsteuerungsprogramms 1, wobei das Funktionsmodell 2 mehrere Funktionsmodellteile 2a, 2b umfasst bzw. in diese Funktionsmodellteile 2a, 2b untergliedert ist. Die Funktionsmodellteile 2a, 2b werden in Funktionscode 3a, 3b übersetzt. Die Modellierung der Funktionsmodellteile 2a, 2b kann auf ganz unterschiedlichen Entwicklungsrechnern unabhängig voneinander durchgeführt werden, wobei jedoch immer zu berücksichtigen ist, dass die Funktionsmodellteile 2a, 2b Daten untereinander austauschen, was vorliegend in den Figuren 1 bis 5 durch eine dünne Verbindungslinie angedeutet ist.

In Fig. 1 ist dargestellt, dass aus dem Funktionsmodellteil 2a der Funktionscode 3a erzeugt wird und aus dem Funktionsmodellteil 2b der Funktionscode 3b erzeugt wird. Wie in Fig. 1 zu erkennen ist, ist der aus jedem Funktionsmodellteil 2a, 2b erzeugte Funktionscode 3a, 3b in dem Sinne vollständig, als dass alle in den jeweiligen Funktionsmodellteilen 2a, 2b verwendeten Datenelemente 4a, 4b in dem Funktionscode 3a, 3b vollständig enthalten sind. Der Funktionscode 3a enthält jedoch nicht die Datenelemente 4b des Funktionsmodellteils 2b, genauso wenig enthält der Funktionscode 3b die Datenelemente 4a des Funktionsmodellteils 2a.

Ausgehend von dem in Fig. 1 dargestellten Funktionscode 3a, 3b ist es ohne weiteres einleuchtend, dass zur Erzeugung eines resultierenden Gesamtsteuerungsprogramms 1 vorab noch ein gewisser "Rahmencode" zu erzeugen ist, der die Verbindung zwischen dem Funktionscode 3a für den Funktionsmodellteil 2a und den Funktionscode 3b für den Funktionsmodellteil 2b herstellt. Dieser Rahmencode muss im Wesentlichen die Funktion f() vor der Funktion g() aufrufen, wobei zwischen den beiden Funktionsaufrufen die Ausgangsgröße out1 der Datenelemente 4a der Eingangsgröße in2 der Datenelemente 4b zuzuweisen ist. Werden in den Funktionsmodellteilen 2a, 2b gleichnamige Datenelemente verwendet, kommt es zu einer doppelten Deklaration und Definition von Datenelementen 4a, 4b in dem Funktionscode 3a, 3b, was unweigerlich bei der Compilierung des Funktionscodes 3a, 3b zu Fehlermeldungen führt.

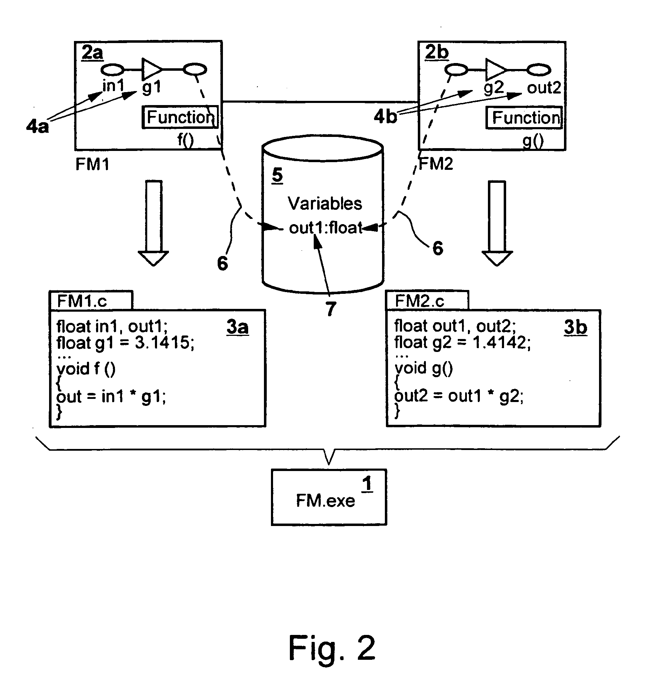

Bei dem in Fig. 2 dargestellten Verfahren aus dem Stand der Technik werden die in den Funktionsmodellteilen 2a, 2b verwendeten Datenelemente 4a, 4b zumindest teilweise in einer von dem Funktionsmodell 2 verschiedenen Datenelementsammlung 5 aufgelistet, vorliegend in Form der Variablen out1, die eine Fließkommazahl (float) ist. Gleichzeitig werden Referenzen 6 zwischen Datenelementen 7 der Datenelementsammlung 5 und jenen Funktionsmodellteilen 2a, 2b des Funktionsmodells 2 erfasst, in denen die Datenelemente 7 verwenden werden; diese Referenzen 6 werden als zusätzliche Referenzinformationen gespeichert.

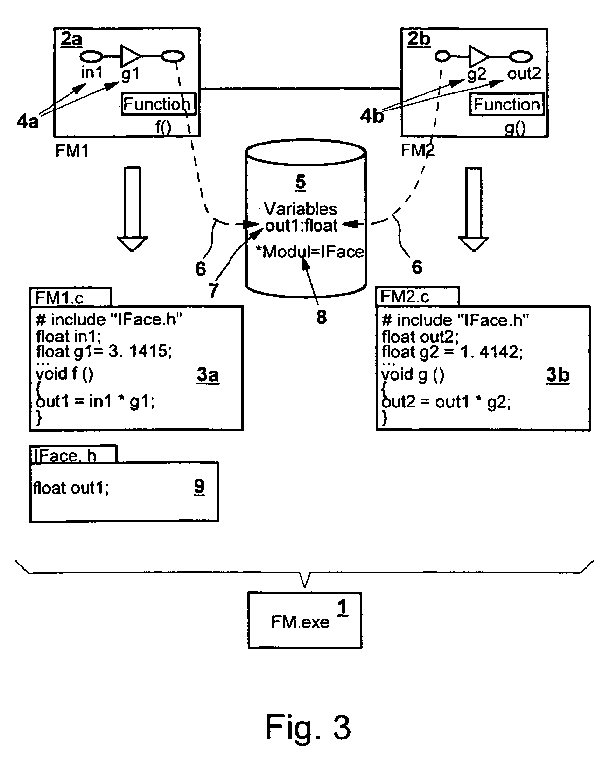

Wird nunmehr aus den Funktionsmodellteilen 2a, 2b, wie bereits aus Fig. 1 bekannt, der Funktionscode 3a, 3b erzeugt, dann geschieht das unter Berücksichtigung der Referenzen 6 aus den Funktionsmodellteilen 2a, 2b in die Datenelementsammlung 5, wodurch erreicht wird, dass gemeinschaftliche Datenelemente 7, die den Funktionsmodellteilen 2a, 2b zugeordnet sind, einheitlich Verwendung finden, wie dies in dem Funktionscode 3a, 3b zu erkennen ist. Zwar werden nunmehr mehrdeutige und widersprüchliche Definitionen von Datenelementen verhindert, jedoch sind unerwünschte Mehrfachdeklarationen ― hier der Variablen out1 ― nicht zu verhindern, was spätestens bei Erzeugung des Gesamtsteuerungsprogramms 1 zu Fehlermeldungen führt. Fig. 3 zeigt schließlich, dass in der Datenelementsammlung 5 solche Datenelemente 7, die mehreren Funktionsmodellteilen 2a, 2b zugeordnet sind, in einer Datenelementgruppe 8 ― hier als "IFace" gekennzeichnet ― als Gemeinschaftsdatenelemente gruppiert werden und in Datencode 9 übersetzt werden. In den Figuren sind alle in der Datenelementsammlung 5 aufgelisteten Datenelemente 7 solche Datenelemente, die mehreren Funktionsmodellteilen 2a, 2b zugeordnet sind und daher auch Gemeinschaftsdatenelemente darstellen. Die Datenelementsammlung 5 kann jedoch auch nicht gemeinschaftlich verwendete Datenelemente aufweisen und diese Datenelemente verschiedenen Datenelementgruppen zuweisen, was vorliegend jedoch nicht von zentraler Bedeutung ist.

Die Gruppierung der Gemeinschaftsdatenelemente geschieht in Fig. 3 durch Zuweisung eines Modulnamens zu den Datenelementen, der hier "IFace" lautet. Wird die Übersetzung einer der Funktionsmodellteile 2a, 2b angestoßen, so wird ― gekoppelt an den Übersetzungsprozess des jeweiligen Funktionsmodellteils 2a, 2b ― auch der Datencode 9 erzeugt. Auch hier besteht wiederum die Möglichkeit, dass der Datencode 9 mehrfach erzeugt wird, es besteht aber auch die Möglichkeit, dass unterschiedlich umfangreiche Versionen des Datencodes 9 erzeugt werden, wobei die zuletzt erzeugte Version des Datencodes 9 dann möglicherweise vorhergehende Versionen des Datencodes 9 überdeckt. Dies ist dann beispielsweise der Fall, wenn sowohl bei dem Übersetzungsprozess für den Funktionsmodellteil 2a als auch bei dem Übersetzungsprozess für den Funktionsmodellteil 2b der Datencode 9 erzeugt wird und die zuletzt erzeugte Version der Header-Datei IFace.h die zuvor generierte Version überdeckt. Unterschiedlich umfangreiche Versionen des Datencodes 9 könnten beispielsweise dann entstehen, wenn in dem Funktionsmodellteil 2a mehr Variablen mit Modulnamenzuordnung "IFace" enthalten wären als im Funktionsmodellteil 2b. Im Ergebnis ist festzustellen, dass die aus dem Stand der Technik bekannten und in den Fig. 1 bis 3 dargestellten Verfahren zur Erzeugung eines ausführbaren Gesamtsteuerungsprogramms 1 verschiedene Nachteile hinsichtlich der Erzeugung von Datencode für ein Gesamtsteuerungsprogramm 1 mit sich bringen.

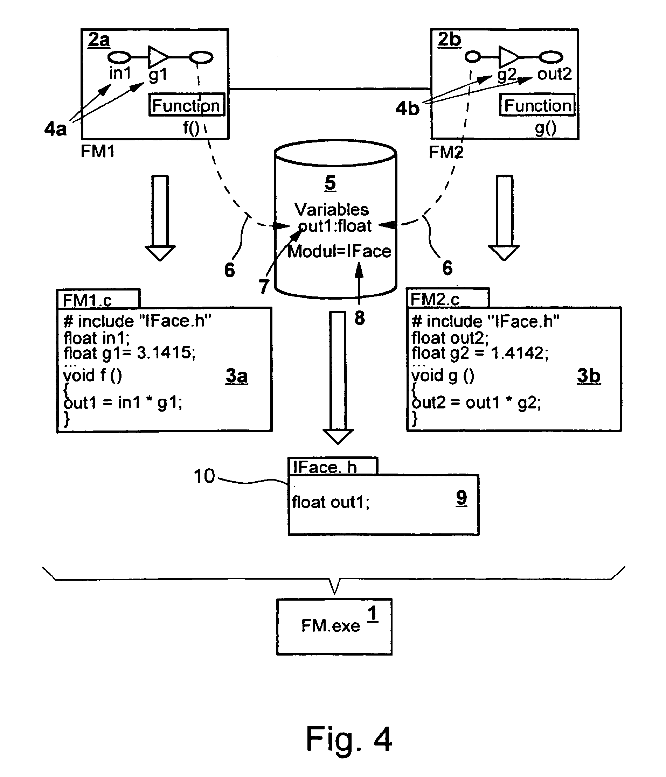

Fig. 4 zeigt das erfindungsgemäße Verfahren zur Erzeugung eines ausführbaren Gesamtsteuerungsprogramms 1, das eine konsistente, vollständige, eindeutige und überdeckungsfreie Generierung von Datencode 9 gestattet, indem nämlich der Datencode 9 für Gemeinschaftsdatenelemente aus der Datensammlung 5 unabhängig von dem Funktionsmodell 2, 2a, 2b erzeugt wird und der Funktionscode 3a, 3b und der Datencode 9 unter Verwendung der Gemeinschaftsdatenelemente und der Referenzinformation vollständig und konsistent zu dem ausführbaren Gesamtsteuerungsprogramm 1 zusammengefügt und übersetzt werden. Das in Fig. 4 dargestellte Verfahren löst sich also von der an das Funktionsmodell 2 bzw. an die Funktionsmodellteile 2a, 2b gekoppelte Erzeugung des Datencodes 9, der Datencode wird ganz im Gegensatz dazu lediglich unter Verwendung der in der Datenelementsammlung 5 hinterlegten Informationen über die Datenelemente 7 vollständig erzeugt, so dass der Datencode 9 ― hier enthalten in der Header-Datei "IFace.h" ― möglicherweise zwar mehr Definitionen von Datenelementen 7 enthält, als dies für die Ausfiihrung eines einzigen der Funktionsmodellteile 2a, 2b bzw. des damit korrespondierenden Funktionscodes 3a, 3b notwendig wäre, jedoch ist der Datencode 9 in jedem Fall hinsichtlich des Gesamtsteuerungsprogramms 1 vollständig, eindeutig und überschneidungsfrei.

Bei dem in Fig. 4 dargestellten Verfahrensablauf werden die als Gemeinschaftsdatenelemente fungierenden Datenelemente 7 in der Datenelementsammlung 5 definiert, wobei diese Gemeinschaftsdatenelemente 7 erst danach in den Funktionsmodellteilen 2a, 2b verwendet werden können, vorliegend nämlich durch die Referenzen 6 auf die in der Datenelementsammlung 5 definierten Gemeinschaftsdatenelemente 7. Dadurch wird automatisch verhindert, dass in den Funktionsmodellteilen 2a, 2b für einheitliche Gemeinschaftsdatenelemente separat unterschiedliche Definitionen erstellt werden, die dann in der gemeinsamen Datenelementsammlung 5 zu Konflikten führen können.

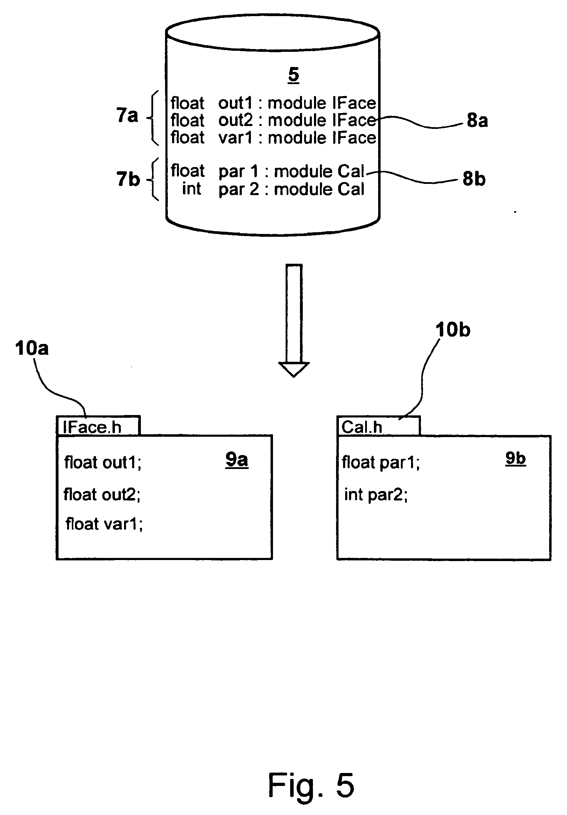

Es hat sich als besonders übersichtlich herausgestellt, wenn der die Datenelemente 7, 7a, 7b einer Datenelementgruppe 8a, 8b repräsentierende Datencode 9, 9a, 9b jeweils in ein separates Datencodemodul 10, 10a, 10b generiert wird, was anhand eines einzigen Datencodemoduls 10 in Fig. 4 dargestellt ist, was in Fig. 5 anhand zweier Datenelementgruppen 8a, 8b und mit diesen Datenelementgruppen 8a, 8b korrespondierendem Datencode 9a, 9b in den separaten Datencodemodulen 10a, 10b ersichtlich ist, wobei die separaten Datencodemodule 10a, 10b die Header-Dateien "IFace.h" und "Cal.h" sind.

In Fig. 5 sind die die Kommunikation zwischen den Funktionsmodellteilen 2a, 2b realisierenden Gemeinschaftsdatenelemente 7a in einer Schnittstellen-Datenelementgruppe 8a mit dem Namen "IFace" gruppiert, und die in den Funktionsmodellteilen 2a, 2b als Parameter 7b verwendeten Gemeinschaftsdatenelemente sind in einer Parameter-Datenelementgruppe 8b gruppiert, die den Namen "Cal" trägt. Durch eine solche Trennung ist es einfach möglich, bei lediglich die Kommunikation zwischen Funktionsmodellteilen 2a, 2b betreffende Änderungen nur selektiv das damit korrespondierende Datencodemodul 10a zu ersetzen, so dass nicht der Datencode 9 aller Datenelemente 7 erzeugt werden muss, was eine erhebliche Zeitersparnis mit sich bringt. Insgesamt ist es vorteilhaft, nach Veränderung von Datenelementen 7 in der Datenelementsammlung 5 nur die Datencodemodule 10 derjenigen Datenelementgruppen 8 neu zu generieren, die überhaupt veränderte Datenelemente 7 enthalten.

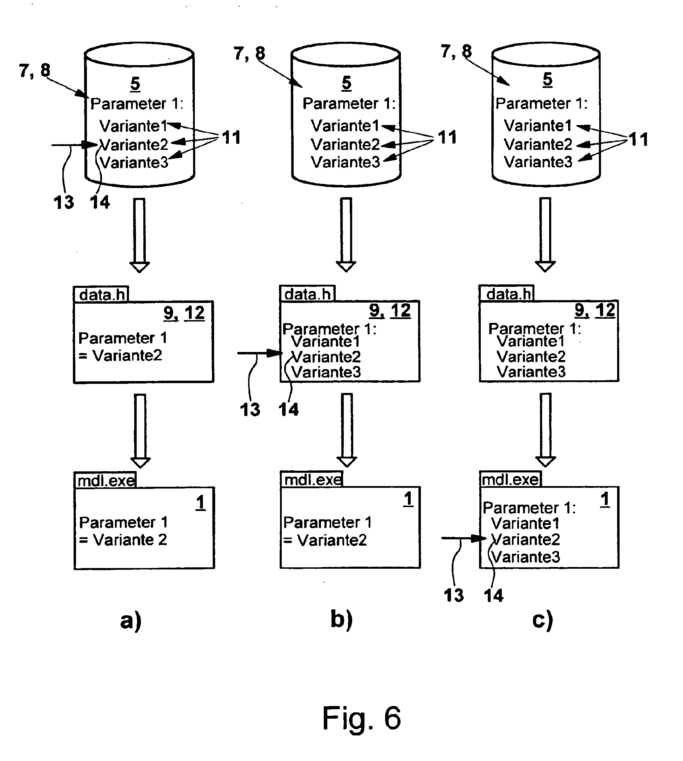

In Fig. 6 ist ein Verfahren zur Erzeugung eines ausführbaren Gesamtsteuerungsprogramms 1 gezeigt, das auf einfache Weise eine Variantenverwaltung ermöglicht. Dazu sind in der Datenelementsammlung 5 verschiedene Varianten 11 einer Datenelementgruppe 8 in Form von "Parameter1" definiert; genauso können auch Varianten 11 von einzelnen Gemeinschaftsdatenelementen 7 definiert werden. Bei diesen Varianten 11 handelt es sich vorliegend um verschiedene Parametersätze einer Verbrennungsmotorabstimmung, die in Zusammenhang mit einer durch das Gesamtsteuerungsprogramm 1 realisierten Motorsteuerung auszutesten sind. Wie in den Fig. 6a, 6b und 6c zu sehen ist, werden die Varianten 11 in Form von Variante1, Variante2 und Variante3 der Datenelementgruppe 8 in der Datenelementsammlung 5 definiert und in Varianten-Datencode 12 übersetzt. Bei dem dargestellten Verfahren ist es zusätzlich möglich, den Selektionszeitpunkt 13 der zu verwendenden Variante 14 aus den insgesamt möglichen und verschiedenen Varianten 11 anzugeben.

Fig. 6a zeigt, dass der Selektionszeitpunkt 13 bereits vor dem Übersetzungsprozess der Datenelemente 7 bzw. der Datenelementgruppen 8 in Datencode 9 liegt. In der Datenelementsammlung 5 sind zwar die Varianten 11 der Datenelementgruppe 8 in Form von Variante1, Variante2 und Variante3 für Parameter1 definiert, jedoch erfolgt die Auswahl der zu verwendenden Variante 14 bereits in der Datenelementsammlung 5, so dass das Ergebnis des Übersetzungsprozesses ein variantenfreier Varianten-Datencode 12 ist. Da dieser Datencode 9 bzw. Varianten-Datencode 12 bereits variantenfrei ist, ist zwangsläufig auch das daraus entstehende Gesamtsteuerungsprogramm 1 variantenfrei.

Anders ist die Situation in Fig. 6b. Hier ist vorgegeben worden, dass eine Auswahl der Varianten erst nach dem Übersetzen der Datenelemente 7 bzw. der Datenelementgruppen 8 in den Datencode 9 erfolgt, so dass der Varianten-Datencode 12 alle Varianten von Parameter1 aufweist, also Variante1, Variante2 und Variante3. Durch geeignete Steuerung des Übersetzungsvorgangs des Datencodes 9 bzw. des Varianten-Datencodes 12, der das Gesamtsteuerungsprogramm 1 zum Ergebnis hat, wird erst jetzt die zu verwendende Variante 14 in Form von Variante2 aus dem Varianten-Datencode 12 ausgewählt. Diese Steuerung erfolgt durch sogenannte Präprozessoranweisungen. Ergebnis ist auch hier, dass das Gesamtsteuerungsprogramm 1 lediglich eine einzige Variante der Datenelementgruppe 8 von Parameter1 aufweist, nämlich Variante2.

In Fig. 6c werden alle Varianten 11 aus der Datenelementsammlung 5 bis in das ausführbare Gesamtsteuerungsprogramm 1 erhalten, wodurch es möglich ist, zur Laufzeit zwischen verschiedenen Varianten 11 auszuwählen. Die für die Auswahl notwendigen Softwarestrukturen werden durch das in Fig. 6 dargestellte Verfahren automatisch generiert; in den Verfahren gemäß Fig. 6b werden dazu automatisch Präprozessoranweisungen generiert, für die Durchführung des Verfahrens gemäß Fig. 6c werden in den Code automatisch Switch-Anweisungen generiert.

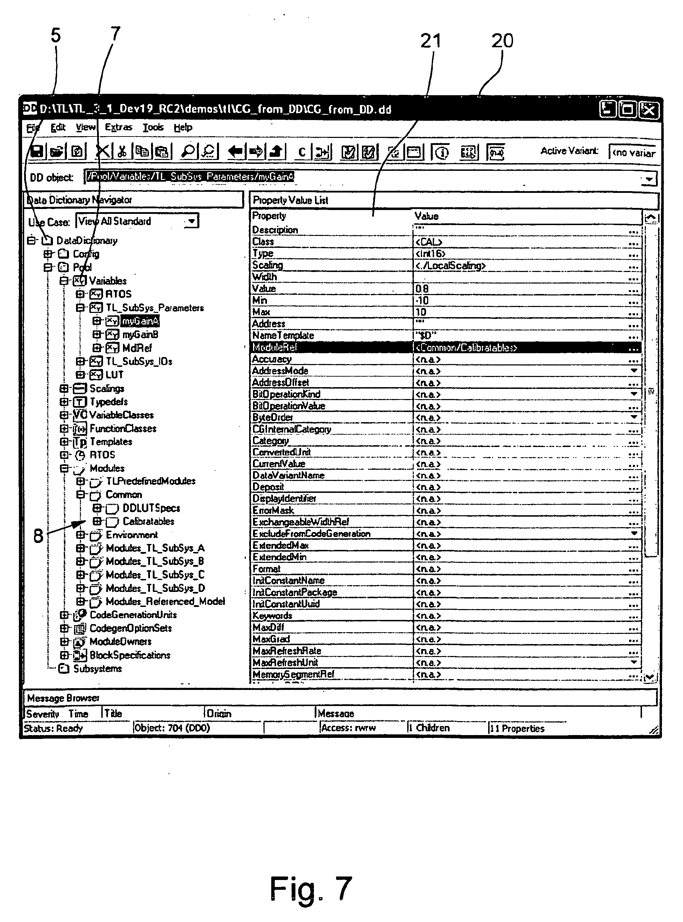

In Fig. 7 ist teilweise dargestellt ein Teil einer Entwicklungsumgebung zur Erzeugung eines ausführbaren Gesamtsteuerungsprogramms 1, nämlich eine Datenelementverwaltungseinheit 20, mit der es möglich ist, die von dem Funktionsmodell 2 zu unterscheidende Datenelementsammlung 5 zu verwalten, genauer, die in den Funktionsmodellteilen 2a, 2b verwendeten Datenelemente 7 in der Datenelementsammlung 5 aufzulisten und zu verwalten.

Die in Fig. 7 als "DataDictionary" bezeichnete Datenelementsammlung 5 enthält als Datenelemente 7 nicht nur Gemeinschaftsdatenelemente, sondern insgesamt eine datenmäßige Beschreibung der Variablen und Parametern aus dem Funktionsmodell 2, die unter "Variables" als Datenelemente 7 aufgelistet und kategorisiert sind. In dem Abschnitt "TL_SubSys_Parameters" werden verschiedene Parameter des an sich nicht dargestellten Funktionsmodellteils mit dem Namen TL_SubSys_Parameters aufgeführt, nämlich in Form der Parameter "myGainA" und "myGainB".

In dem Listenfeld 21 der Datenelementverwaltungseinheit 20 können verschiedene Eigenschaften der unter "Variables" geführten Datenelemente 7 angegeben werden. Wie in Fig. 7 anhand der dunklen Hinterlegung des Schriftzugs "MyGainA" zu erkennen ist, ist dieses Datenelement 7 ausgewählt, so dass entsprechende Eigenschaften des Datenelements 7 in dem Listenfeld 21 vorgenommen werden können. Wie dem Listenfeld 21 zu entnehmen ist, ist das Datenelement "MyGainA" der Datenelementgruppe "Calibratables" zugeordnet, was der internen Referenz "ModuleRef" auf die Datenelementgruppe 8 "Calibratables" zu entnehmen ist. Die für die Kalibrierung erforderlichen Parameter des Funktionsmodells 2 sind in der Datenelementgruppe 8 "Calibratables" gruppiert. Die Datenelementgruppe ist hier als eigenständiges Objekt der Datenelementsammlung angelegt. Durch die aufgezeigte Zuordnung des Datenelements 7 zu diesem Objekt wird vorliegend die Zugehörigkeit des Datenelements 7 "myGainA" zur Datenelementgruppe 8 "Calibratables" definiert.

## Patentansprüche

1. Verfahren zur Erzeugung eines ausführbaren Gesamtsteuerungsprogramms (1), insbesondere eines Mess-, Steuer-, Regel- und/oder Kalibrierungsprogramms, zur Steuerung eines Steuerungssystems mit mindestens einer elektronischen Rechnereinheit, wobei mehrere Funktionsmodellteile (2a, 2b) eines die Funktionalität des Gresamtsteuerungsprogramms (1) beschreibenden Funktionsmodells (2) in Funktionscode (3a, 3b) übersetzt werden, die in den Funktionsmodellteilen (2a, 2b) verwendeten Datenelemente (4a, 4b) zumindest teilweise in einer von dem Funktionsmodell (2) verschiedenen Datenelementsammlung (5) aufgelistet werden, wobei Referenzen (6) zwischen Datenelementen (7) in der Datenelementsammlung (5) und jenen Funktionsmodellteilen (2a, 2b) des Funktionsmodells (2) erfasst werden, in denen die Datenelemente (7) verwendet werden und diese Referenzen (6) als zusätzliche Referenzinformationen gespeichert werden, wobei in der Datenelementsammlung (5) solche Datenelemente (7), die mehreren Funktionsmodellteilen (2a, 2b) zugeordnet sind, in wenigstens einer Datenelementgruppe (8) als Gemeinschaftsdatenelemente gruppiert werden und wenigstens ein Teil der Datenelemente (7) der Datenelementsammlung (5) in Datencode (9) übersetzt wird,
**dadurch gekennzeichnet,**
**dass** der Datencode (9) für alle Gemeinschaftsdatenelemente aus der Datensammlung (5) unabhängig von dem Funktionsmodell (2) erzeugt wird und dadurch der Funktionscode (3a, 3b) und der Datencode (9) vollständig und unter Verwendung der Referenzinformation konsistent zu dem ausführbaren Gesamtsteuerungsprogramm (1) zusammengefügt und übersetzt werden.

2. Verfahren nach Anspruch 1, **dadurch gekennzeichnet, dass** Gemeinschaftsdatenelemente in der Datenelementsammlung (5) definiert werden und diese Gemeinschaftsdatenelemente erst danach in den Funktionsmodellteilen (2a, 2b) durch Referenzen (6) auf die in der Datenelementsammlung (5) definierten Gemeinschaftsdatenelemente verwendet werden.

3. Verfahren nach Anspruch 1 oder 2, **dadurch gekennzeichnet, dass** der die Datenelemente (7, 7a, 7b) einer Datenelernentgruppe (8, 8a, 8b) repräsentierende Datencode (9, 9a, 9b) jeweils in ein separates Datencodemodul (10, 10a, 10b) generiert wird.

4. Verfahren nach einem der Ansprüche 1 bis 3, **dadurch gekennzeichnet, dass** die die Kommunikation zwischen Funktionsmodellteilen (2a, 2b) realisierenden Gemeinschaftsdatenelemente (7a) zumindest teilweise in einer Schnittstellen-Datenelementgruppe (8a) gruppiert werden und/oder die in Funktionsmodellteilen (2a, 2b) als Parameter (7b) verwendeten Gemeinschaftsdatenelemente in einer Parameter-Datenelementgruppe (8b) gruppiert werden.

5. Verfahren nach einem der Ansprüche 1 bis 4, **dadurch gekennzeichnet, dass** in der Datenelementsammlung (5) verschiedene Varianten (11) von Gemeinschaftsdatenelementen (7) und/oder von Varianten von Datenelementgruppen (8) von Gemeinschaftsdatenelementen definiert werden und bei der Übersetzung entsprechender Varianten-Datencode (12) erzeugt wird.

6. Verfahren nach Anspruch 5, **dadurch gekennzeichnet, dass** in der Datenelementsammlung (5) der Selektionszeitpunkt (13) der zu verwendenden Variante (14) aus den verschiedenen Varianten (11) angegeben wird, nämlich ob die zu verwendende Variante bei der Übersetzung in Datencode (9), bei der Übersetzung des Datencodes (9) in das ausführbare Gesamtsteuerungsprogramm (1) oder bei Ausführung des Gesamtsteuerungsprogramms (1) ausgewählt wird, und wobei in Abhängigkeit von dem Selektionszeitpunkt (13) automatisch entsprechender Datencode (9) erzeugt und ein entsprechendes ausführbares Gesamtsteuerungsprogramm (1) übersetzt wird.

7. Verfahren nach einem der Ansprüche 4 bis 6 soweit auf Anspruch 3 rückbezogen, **dadurch gekennzeichnet, dass** nach Veränderung von Datenelementen (7) in der Datenelementsammlung (5) nur die Datencodemodule (10) derjenigen Datenelementgruppen (8) neu generiert werden, die veränderte Datenelemente (7) enthalten.

8. Computerprogramm mit Programmcode-Mitteln, um alle mit Hilfe des Verfahrens nach einem der Ansprüche 1 bis 7 vollzogenen Schritte durchzufuhren, wenn das Programme auf einer Datenverarbeitungsanlage ausgeführt
wird.

9. Computerprogramm mit Programmcode-Mitteln nach Anspruch 8, die auf einem computerlesbaren Datenträger gespeichert sind.

10. Entwicklungsumgebung zur Erzeugung eines ausführbaren Gesamtsteuerungsprogramms (1), insbesondere eines Mess-, Steuer-, Regel- und/oder Kalibrierungsprogramms, zur Steuerung eines Steuerungssystems mit mindestens einer elektronischen Rechnereinheit, mit wenigstens einem Entwicklungsrechner, wenigstens einer Modellierungseinheit, wenigstens einer Datenelementverwaltungseinheit (20) und wenigstens einer Funktionscodegenerierungseinheit, wobei mit der auf dem Entwicklungsrechner betriebenen Modellierungseinheit wenigstens ein Funktionsmodellteil (2a, 2b) eines die Funktionalität des Gesamtsteuerungsprogramms (1) beschreibenden Funktionsmodells (2) modelliert werden kann und die Funktionsmodellteile (2a, 2b) mittels der Funktionscodegenerierungseinheit in Funktionscode übersetzbar sind, die in den Funktionsmodellteilen verwendeten Datenelemente (7) mit der Datenelementverwaltungseinheit (20) in einer von dem Funktionsmodell (2) verschiedenen Datenelementsammlung (5) aufgelistet und verwaltet werden können, wobei mit der Modellierungseinheit Referenzen (6) zwischen Datenelementen (7) in der Datenelementsammlung (5) und jenen Funktionsmodellteilen (2a, 2b) des Funktionsmodells (2) erfassbar sind, in denen die Datenelemente (7) verwendet werden, und diese Referenzen (6) als zusätzliche Referenzinformationen gespeichert werden, wobei mit der Datenelementverwaltungseinheit (20) in der Datenelementsammlung (5) solche Datenelemente (7), die mehreren Funktionsmodellteilen (2a, 2b) zugeordnet sind, in wenigstens einer Datenelementgruppe (8) als Gemeinschaftsdatenelemente gruppiert werden können und wenigstens ein Teil der Datenelemente (7) der Datenelementsammlung (5) in Datencode übersetzt werden kann,
**dadurch gekennzeichnet,**
**dass** der Datencode (9) für alle Gemeinschaftsdatenelemente aus der Datensammlung (5) mit einer Datencodegenerierungseinheit und damit unabhängig von dem Funktionsmodell (2) erzeugt werden kann und dadurch der Funktionscode und der Datencode (9) vollständig und unter Verwendung der Referenzinformation konsistent zu dem ausführbaren Gesamtsteuerungsprogramm (1) zusammengefügt und übersetzt werden kann.

## Claims

1. Method for creating an executable overall control program (1), in particular a measurement, control, feedback, and/or calibration program for controlling a control system having at least one electronic processor, a plurality of functional model parts (2a, 2b) of a functional model (2) describing the functionality of the overall control program (1) being translated into functional code (3a, 3b), the data elements (4a, 4b) used in the functional model parts (2a, 3b) being at least partially listed in a data element collection (5) different from the functional model (2), references (6) between the data elements (7) in the data element collection (5) and the functional model parts (2a, 2b) of the functional model (2) being captured, in which references the data elements (7) are used, and said references (6) being stored as additional reference information, such data elements (7) associated with a plurality of functional model parts (2a, 2b) in the data element collection (5) being grouped in at least one data element group (8) as common data elements, and at least one part of the data elements (7) of the data element collection being translated into data code (9),
**characterized in that**,
the data code (9) for all common data elements is generated from the data collection (5) independently of the functional model (2), and thereby the functional code (3a, 3b) and the data code (9) are fully by using the reference information consistently merged and translated to form the executable overall control program (1).

2. The method according to claim 1, **characterized in that** common data elements are defined in the data element collection (5) and said common data elements are used only afterwards in the functional model parts (2a, 2b) by references (6) to the common data elements defined in the data element collection (5).

3. The method according to claim 1 or 2, **characterized in that** the data code (9, 9a, 9b) representing the data elements (7, 7a, 7b) of a data element group (8, 8a, 8b is generated into a separate data code module (10, 10a, 10b), respectively.

4. The method according to any one of the claims 1 through 3, **characterized in that** the common data elements (7a) implementing the communication between functional model parts (2a, 2b) are at least partially grouped in an interface data element group (8a), and/or the common data elements used as parameters (7b) in functional model parts (2a, 2b) are grouped in a parameter data element group (8b).

5. The method according to any one of the claims 1 through 4, **characterized in that** different variants (11) of common data elements (7) and/or of variants of data element groups (8) of common data elements are defined in the data element collection (5) and corresponding variant data code (12) is generated when translating.

6. The method according to claim 5, **characterized in that** the time of selection (13) of the variant (14) to be used from the different variants (11) is indicated in the data element collection (5), namely whether the variant to be used is selected when translating into data code (9), when translating the data code (9) into the executable overall control program (1) or when executing the overall control program (1), and wherein, depending on the time of selection (13), corresponding data code (9) is automatically generated and a corresponding executable overall control program (1) is translated.

7. The method according to one of the claims 4 through 6, to the extent claim 3 is referenced in turn, **characterized in that** after changing data elements (7) in the data element collection (5), only the data code modules (10) of those data element groups (8) that comprise changed data elements (7) are generated anew.

8. A computer program having program code means for performing all steps implemented by means of the method according to any one of the claims 1 through 7, when the program is executed on a data processing system.

9. The computer program having program code means according to claim 8 stored on a computer-readable data storage medium.

10. A development environment for generating an executable overall control program (1), in particular a measurement, control, feedback, and/or calibration program, for controlling a control system having at least one electronic processor, having at least one development processor, at least one modeling unit, at least one data element management unit (20), and at least one functional code generating unit, in which at least one functional model part (2a, 2b) of a functional model (2) describing the functionality of the overall control program (1) can be modeled by means of the modeling unit operated on the development processor, and the functional model parts (2a, 2b) can be translated into functional code by means of the functional code generating unit, the data elements (7) used in the functional model parts can be listed and managed in a data element collection (5) different from the functional model (2) by means of the data element management unit (20), and in which references (6) between data elements (7) in the data element collection (5) and any function model parts (2a, 2b) of the functional model (2) in which the data elements (7) are used can be captured by means of the modeling unit, said references (6) being stored as additional reference information, such data elements (7) that are associated with a plurality of function model parts (2a, 2b) being able to be grouped in at least one data element group (8) as common data elements in the data element collection (5) by means of the data element management unit (20), and at least one part of the data elements (7) of the data element collection (5) being able to be translated into data code, **characterized in that**
the data code (9) for all common data elements can be generated from the data collection (5), by means of a data code generating unit, thus independently of the function model (2), and thereby the function code and the data code (9) can be fully and by using the reference information consistently merged and translated to form the executable overall control program (1).

## Revendications

1. Procédé pour produire un programme de commande exécutable global (1), particulièrement un programme de mesure, de commande, de régulation et/ou d'étalonnage, destiné à la commande d'un système de commande avec au moins une unité de calcul électronique, sachant que plusieurs parties de modèle de description fonctionnelle (2a, 2b) d'un modèle de description (2) décrivant la fonctionnalité du programme de commande global (1) sont traduits en codes fonctionnels (3a, 3b), les éléments de données (4a, 4b) utilisés dans les parties de modèle de description fonctionnelle (2a, 2b) sont listés au moins partiellement dans un stock d'éléments de données (5) différent du modèle de description fonctionnelle (2), sachant que des références (6) sont saisies entre des éléments de données (7) dans le stock d'éléments de données (5) et ces parties de modèle de description fonctionnelle (2a, 2b) du modèle de description fonctionnelle (2), dans lesquelles les éléments de données (7) sont utilisés et ces références (6) sont mémorisées en tant qu'informations de référence supplémentaires, sachant que, dans le stock d'éléments de données (5), les éléments de données (7) qui sont attribués à plusieurs parties de modèle de description fonctionnelle (2a, 2b) sont groupés dans au moins un groupe d'éléments de données (8) en tant qu'éléments de données communes et au moins une partie des éléments de données (7) du stock d'éléments de données (5) est traduite en code de données (9),
**caractérisé en ce que**
le code de données (9) pour tous les éléments de données communes du stock de données (5) est généré indépendamment du modèle de description fonctionnelle (2) et, de ce fait, le code fonctionnel (3a, 3b) et le code de données (9) sont assemblés et traduits complètement et par utilisation des informations de référence, de manière consistante avec le programme de commande exécutable global (1).

2. Procédé selon la revendication 1, **caractérisé en ce que** des éléments de données communes sont définis dans le stock d'éléments de données (5) et ces éléments de données communes ne sont utilisés qu'ensuite dans les parties de modèle de description fonctionnelle (2a, 2b) par les références (6) sur les éléments de données communes définis dans le stock d'éléments de données (5).

3. Procédé selon la revendication 1 ou 2, **caractérisé en ce que** le code de données (9, 9a, 9b) représentant les éléments de données (7, 7a, 7b) d'un groupe d'éléments de données (8, 8a, 8b) est généré respectivement dans un module de code de données séparé (10, 10a, 10b).

4. Procédé selon l'une des revendications 1 à 3, **caractérisé en ce que** les éléments de données communes (7a) réalisant la communication entre des parties de modèle de description fonctionnelle (2a, 2b) sont groupés au moins partiellement dans un groupe d'éléments de données d'interface (8a) et/ou les éléments de données communes utilisés comme paramètres (7b) dans les parties de modèle de description fonctionnelle (2a, 2b) sont groupés dans un groupe d'éléments de données de paramètre (8b).

5. Procédé selon l'une des revendications 1 à 4, **caractérisé en ce que** dans le stock d'éléments de données (5), différentes variantes (11) d'éléments de données communes (7) et/ou de groupes d'éléments de données (8) d'éléments de données communes sont définies et un code de données de variante (12) correspondant est généré lors de la traduction.

6. Procédé selon la revendication 5, **caractérisé en ce que** dans le stock d'éléments de données (5), le moment de sélection (13) de la variante (14) à utiliser parmi les différentes variantes (11) est indiqué, à savoir, si la variante à utiliser doit être sélectionnée lors de la traduction en code de données (9), lors de la traduction du code de données (9) en programme de commande exécutable global (1) ou lors de l'exécution du programme de commande exécutable global (1), et sachant qu'en fonction du moment de sélection (13), un code de données (9) correspondant est automatiquement généré et un programme de commande exécutable global (1) correspondant est automatiquement traduit.

7. Procédé selon l'une des revendications 4 à 6, dans la mesure où celles-ci s'appuient sur le revendication 3, **caractérisé en ce que**, après une modification d'éléments de données (7) dans le stock de données (5), seuls les modules de code de données (10) des groupes d'éléments de données (8) contenant des éléments de données (7) modifiés sont régénérés.

8. Programme d'ordinateur avec des moyens de code de programme pour exécuter toutes les étapes exécutées à l'aide du procédé selon l'une des revendications 1 et 7 lorsque le programme est exécuté sur une installation de traitement de données.

9. Programme d'ordinateur avec des moyens de code de programme selon la revendication 8, qui sont mémorisés sur un support de données lisible par ordinateur.

10. Environnement de développement pour produire un programme de commande exécutable global (1), particulièrement un programme de mesure, de commande, de régulation et/ou d'étalonnage, destiné à la commande d'un système de commande avec au moins une unité de calcul électronique, avec au moins un calculateur de développement, au moins une unité de modélisation, au moins une unité de gestion d'éléments de données (20) et au moins une unité de génération de code fonctionnel, sachant qu'au moins une partie de modèle de description fonctionnelle (2a, 2b) d'un modèle de description fonctionnelle (2) décrivant la fonctionnalité du programme de commande exécutable global (1) peut modélisée à l'aide de l'unité de modélisation exploitée sur le calculateur de développement et les parties de modèle de description fonctionnelle (2a, 2b) peuvent être traduites en codes fonctionnels à l'aide de l'unité de génération de codes fonctionnels, les éléments de données (7) utilisés dans les parties de modèles de description fonctionnelle peuvent être listés et gérés par l'unité de gestion d'éléments de données (20) dans un stock d'éléments de données (5) différent du modèle de description fonctionnelle (2), sachant qu'à l'aide de l'unité de modélisation, des références (6) peuvent être saisies entre des éléments de données (7) dans le stock d'éléments de données (5) et celles des parties de modèle de description fonctionnelle (2a, 2b) du modèle de description fonctionnelle (2), dans lesquelles les éléments de données (7) sont utilisés, et ces références (6) sont mémorisées en tant qu'informations de référence supplémentaires, sachant qu'à l'aide de l'unité de gestion d'éléments de données (20), les éléments de données (7) dans le stock d'éléments de données (5), qui sont attribués à plusieurs parties de modèle de description fonctionnelle (2a, 2b), peuvent être groupés dans au moins un groupe d'éléments de données (8) en tant qu'éléments de données communes et au moins une partie des éléments de données (7) du stock d'éléments de données (5) peut être traduite en codes de données,
**caractérisé en ce que**
le code de données (9) pour tous les éléments de données communes du stock de données (5) peut être généré à l'aide d'une unité de génération de codes de données, et donc indépendamment du modèle de description fonctionnelle (2), et, de ce fait, le code fonctionnel et le code de données (9) peuvent être assemblés et traduits complètement et par utilisation des informations de référence, de manière consistante avec le programme de commande exécutable global (1).
